# EUROPEAN PATENT APPLICATION

(11) **EP 4 592 972 A1**
(43) Date of publication of application: **30.07.2025**
(21) Application number: 24205322.1
(22) Date of filing: 08.10.2024
(51) Int. Cl.: G06V 10/82, G06V 20/00

(54) **METHOD, APPARATUS AND PROGRAM FOR IDENTITY DETERMINATION BASED ON ARTIFICIAL INTELLIGENCE**

(30) Priority: 23.01.2024 KR 20240009894
(71) Applicant: Pinokio Lab Corp., Seoul (KR)
(72) Inventor: CHO, Yongsuk, Goyang-si (KR); LEE, Sungeui, Seoul (KR)
(74) Representative: Walaski, Jan Filip

(57) **Abstract**

A method of identity determination based on artificial intelligence according to various embodiments of the present invention is disclosed. The method may include: acquiring a first image of a reference product; acquiring a second image of a comparison target product which is a comparison target of the reference product; acquiring a plurality of first features corresponding to the first image and a plurality of second features corresponding to the second image by inputting the first image and the second image to a feature extraction model; generating a plurality of feature pairs by matching the plurality of first features and the plurality of second features; acquiring a similarity score for each of the plurality of feature pairs by inputting two features constituting each of the plurality of feature pairs to a similarity analysis model; and determining an identity between the reference product and the comparison target product based on the similarity score.

## Description

### CROSS-REFERENCE TO RELATED APPLICATION

This application claims priority to and the benefit of Korean Patent Application No. 2024-0009894, filed on January 23, 2024, the disclosure of which is incorporated herein by reference in its entirety.

### BACKGROUND

### 1. Field of the Invention

The present invention relates to a method, apparatus, and program for identity determination based on artificial intelligence, and more particularly, to a method, apparatus, and program for determining identity between products included in each of two images using an artificial intelligence model.

### 2. Discussion of Related Art

Recently, the domestic and international luxury product market size has been gradually expanding due to abundant liquidity, and the illegal distribution of counterfeit products and the fraud using counterfeit products have also become active with the expansion of the luxury product market size.

The counterfeit product market size has been steadily increasing around the world, and the fashion industry, in particular, is suffering the most. In addition, extensive damage is occurring to various brands with premiums such as electronic appliances, watches, and medical devices.

Counterfeit products may cause various social, environmental, health, and safety problems beyond simple economic problems. For example, the quality of counterfeit products (or fake products) is lower than that of official products (or genuine products). In particular, counterfeit products such as electrical appliances, medicines, and cosmetics may not comply with safety standards, which may not only pose a threat to health and safety of users, and but also cause financial losses to consumers who mistake counterfeit products as genuine products and purchase the counterfeit products. In addition, the distribution of counterfeit products may reduce sales of genuine products, and also have an adverse effect on companies because it may damage brand recognition due to low quality. For this reason, many countries are implementing strict regulations and monitoring of counterfeit products.

For example, as the counterfeit product market size increases, the risk of so-called return fraud, in which counterfeit products return after purchasing genuine products, is also increasing. In other words, counterfeit products may not only threaten the health and safety of consumers, but also cause suppliers who sell genuine products to spend a lot of resources and capital through return fraud, resulting in making it impossible to provide excellent service to their customers.

Therefore, in order to solve the side effects of the increase in the counterfeit product market size, a demand for a method of determining identity between two products using artificial intelligence technology exists in the art. In this regard, Korean Laid-Open Patent Publication No. 10-2422808 discloses a system and method for return fraud detection and prevention.

### SUMMARY OF THE INVENTION

The present invention is directed to providing a method, apparatus, and program for identity determination based on artificial intelligence.

However, aspects of the present invention are not restricted to those set forth herein. The above and other aspects of the present invention will become more apparent to one of ordinary skill in the art to which the present invention pertains by referencing the detailed description of the present invention given below.

According to an aspect of the present invention, there is provided a method of identity determination based on artificial intelligence. The method includes acquiring a first image of a reference product, acquiring a second image of a comparison target product which is a comparison target of the reference product, acquiring a plurality of first features corresponding to the first image and a plurality of second features corresponding to the second image by inputting the first image and the second image to a feature extraction model, generating a plurality of feature pairs by matching the plurality of first features and the plurality of second features, acquiring a similarity score for each of the plurality of feature pairs by inputting two features constituting each of the plurality of feature pairs to a similarity analysis model, and determining an identity between the reference product and the comparison target product based on the similarity scores.

The generating of the plurality of feature pairs by matching the plurality of first features and the plurality of second features may include generating n*m feature pairs by matching each of n first features corresponding to the first image with each of m second features corresponding to the second image.

The method may include selecting a plurality of main feature pairs from among the plurality of feature pairs based on the similarity scores when the similarity score for each of the plurality of feature pairs are acquired, in which the determining of the identity between the reference product and the comparison target product may include determining the identity based on the similarity score for the main feature pairs.

The selecting of the plurality of main feature pairs from among the plurality of feature pairs based on the similarity scores when the similarity score for each of the plurality of feature pairs are acquired may include recognizing overlapping feature pairs composed of mutually overlapping features among the plurality of feature pairs, and selecting a specific feature pair with a highest similarity score from among the overlapping feature pairs as the main feature pair.

The determining of the identity based on the similarity score for the main feature pair may include recognizing the number of feature pairs with a similarity score exceeding a preset size among the main feature pairs, and recognizing that the reference product and the comparison target product are the same when the number of the feature pairs exceeds the preset number.

The feature extraction model may be a model pre-trained to extract a plurality of features from an image when the image is input, and the similarity analysis model may be a model pre-trained to allow the feature extraction model to output a similarity score between features extracted from each of two different images.

The acquiring of the first image of the reference product or the acquiring of the second image of the comparison target product according to a request for return of the reference product may include providing a capturing guide to a user terminal for capturing an image, and the capturing guide may include at least one of a first capturing guide that displays a reference image around a capturing screen, a second capturing guide that displays the reference image by overlapping the reference image on the capturing screen, and a third capturing guide that compares an illuminance value recognized through the capturing screen with an appropriate illuminance value and displays the compared illuminance value on the capturing screen.

The method may further include authenticating a connection relationship between a product and a digital certificate, in which the authenticating of the connection relationship between the product and the digital certificate includes: acquiring a specific image captured from a specific product and a specific digital certificate corresponding to the specific product; acquiring a plurality of third features corresponding to the specific digital certificate; acquiring a plurality of fourth features by inputting the specific image into the feature extraction model; generating a plurality of feature pairs for authentication by matching the plurality of third features and the plurality of fourth features; acquiring a similarity score for each of the plurality of feature pairs for authentication by inputting two features constituting each of the plurality of feature pairs for authentication to a similarity analysis model; and determining whether the specific product is a product corresponding to the digital certificate based on the similarity scores.

According to another aspect of the present invention, there is provided an apparatus. The apparatus includes a memory configured to store one or more instructions, and a processor configured to execute the one or more instructions stored in the memory, in which the processor may perform the above-described method by executing the one or more instructions.

According to still another aspect of the present invention, there is provided a computer program stored in a computer-readable recording medium to execute the above-described method in conjunction with a computer which is hardware.

Other detailed contents of the present invention are described in the detailed description and are illustrated in the drawings.

### BRIEF DESCRIPTION OF DRAWINGS

The above and other objects, features and advantages of the present invention will become more apparent to those of ordinary skill in the art by describing exemplary embodiments thereof in detail with reference to the accompanying drawings, in which:
FIG. 1 is a diagram illustrating a system according to an embodiment of the present invention;
FIG. 2 is a hardware configuration diagram of a computing device according to an embodiment of the present invention;
FIGS. 3 to 6 are diagrams for describing an example of a method of identity determination based on artificial intelligence according to an embodiment of the present invention;
FIG. 7 is a diagram for describing an example of a method of authenticating a connection relationship between a product and a digital certificate according to various embodiments of the present invention; and
FIG. 8 is a schematic diagram illustrating one or more network functions related to an embodiment of the present invention.

### DETAILED DESCRIPTION OF EXEMPLARY EMBODIMENTS

Hereinafter, various embodiments will be described with reference to the drawings. In this specification, various descriptions are presented to provide an understanding of the invention. However, it is obvious that these embodiments may be practiced without these specific descriptions.

Terms used herein "component," "module," "system," etc., refer to a computer-related entity, hardware, firmware, software, a combination of software and hardware, or an implementation of software. For example, the component may be, but is not limited to, a procedure running on a processor, a processor, an object, an execution thread, a program, and/or a computer. For example, both an application running on a computing device and the computing device may be a component. One or more components may reside within a processor and/or execution thread. One component may be localized within one computer. One component may be distributed between two or more computers. In addition, these components may be executed from various computer-readable media having various data structures stored therein. Components may communicate via local and/or remote processes (e.g., data from one component interacting with other components in a local system and a distributed system and/or data transmitted to other systems via networks such as the Internet according signals), for example according to signals with one or more data packets.

In addition, the term "or" is intended to mean an inclusive "or," not an exclusive "or." That is, unless otherwise specified or clear from context, "X uses A or B" is intended to mean one of the natural implicit substitutions. That is, when either X uses A; X uses B; or X uses both A and B, "X uses A or B" may apply to either of these cases. In addition, the term "and/or" used herein should be understood to refer to and include all possible combinations of one or more of the related items listed.

In addition, the terms "include" and/or "including" should be understood to mean that the corresponding feature and/or component is present. However, the terms "include" and/or "including" should be understood as not excluding the presence or addition of one or more other features, components and/or groups thereof. In addition, unless otherwise specified or the context is clear to indicate a singular form, the singular form in the present specification and in the claims should generally be construed to mean "one or more."

In addition, those skilled in the art should recognize that various illustrative logical blocks, configurations, modules, circuits, means, logic, and algorithm steps described in connection with the embodiments disclosed herein may be implemented by electronic hardware, computer software, or a combination of both. To clearly illustrate interchangeability of hardware and software, various illustrative components, blocks, configurations, means, logics, modules, circuits, and steps have been described above generally in terms of their functionality. Whether such functionality is implemented by hardware or software will depend on the specific application and design constraints imposed on the overall system. Those skilled in the art may implement the described functionality in a variety of ways for each specific application. However, such implementation determinations should not be construed as departing from the scope of the present invention.

The description of the presented embodiments is provided to enable those skilled in the art to make or use the present invention. Various modifications to these embodiments will be apparent to those skilled in the art. The general principles defined herein may be applied to other embodiments without departing from the scope of the invention. Therefore, the present invention is not limited to the embodiments presented herein. The present invention should be interpreted in the broadest scope consistent with the principles and novel features presented herein.

In this specification, a computer means any kind of hardware devices including at least one processor, and can be understood as including a software configuration which is operated in the corresponding hardware device according to the embodiment. For example, the computer may be understood as a meaning including any of smart phones, tablet PCs, desktops, laptops, and user clients and applications running on each device, but is not limited thereto.

Hereinafter, embodiments of the present invention will be described in detail with reference to the accompanying drawings.

Each step described in this specification is described as being performed by a computer, but subjects of each step are not limited thereto, and according to embodiments, at least some of each steps can also be performed on different devices.

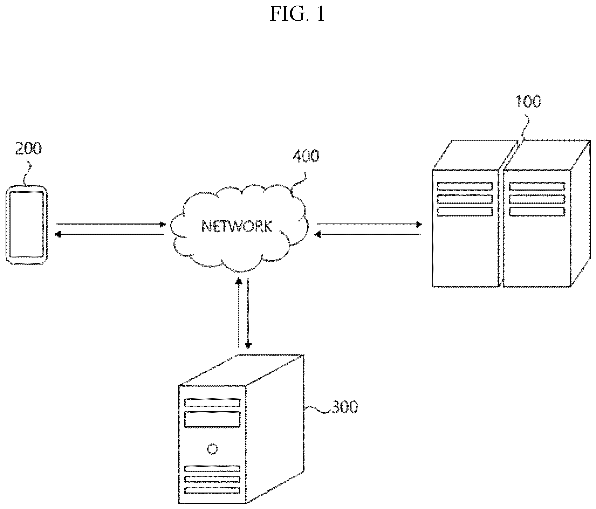

FIG. 1 is a diagram illustrating a system according to an embodiment of the present invention.

Referring to FIG. 1, the system according to an embodiment of the present invention may include a computing device 100, a user terminal 200, and an external server 300. Here, the system illustrated in FIG. 1 is according to an embodiment, and components of the system are not limited to the embodiment illustrated in FIG. 1, and may be added, changed, or omitted as necessary.

In an embodiment, the computing device 100 may perform a method of identity determination based on artificial intelligence.

Specifically, the computing device 100 may acquire a first image of a reference product. In addition, the computing device 100 may acquire a second image of a comparison target product which is a comparison target of the reference product. In addition, the computing device 100 may input the first image and the second image to a feature extraction model, and acquire a plurality of first features corresponding to the first image and a plurality of second features corresponding to the second image. In addition, the computing device 100 may match the plurality of first features and the plurality of second features to generate a plurality of feature pairs. In addition, the computing device 100 may input two features constituting each of the plurality of feature pairs to a similarity analysis model, thereby acquiring similarity scores for each of the plurality of feature pairs. In addition, the computing device 100 may determine the identity between the reference product and the comparison target product based on the similarity score.

Therefore, the computing device 100 of the present invention may accurately determine the identity between the reference product and the comparison target product using an artificial intelligence model. For example, the computing device 100 of the present invention may determine identity between a shipped product (reference product) and a returned product (comparison target product), thereby accurately and quickly determining whether there is a return fraud. Furthermore, the present invention may prevent damage to a supplier or seller of an official product.

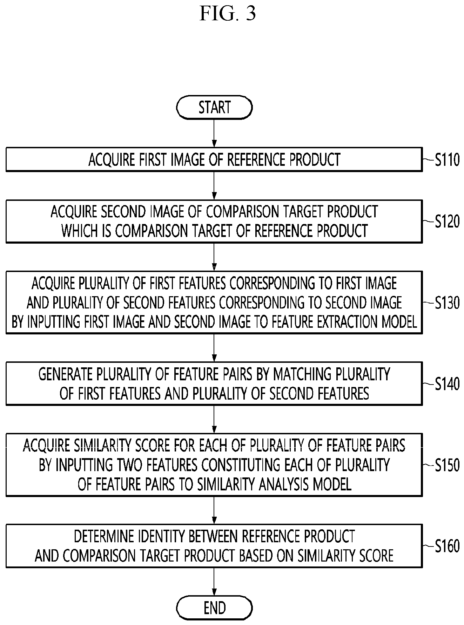

Hereinafter, an example of the method of identity determination based on artificial intelligence performed by the computing device 100 will be described below with reference to FIGS. 3 to 6.

According to various embodiments of the present invention, the computing device 100 may perform a function of authenticating a connection relationship between a digital certificate and a product using the method of determining identity between products included in two images based on the similarity scores for each of the plurality of feature pairs. Here, the digital certificate may include information that certifies that a product is genuine and features extracted from an image captured from the product.

Specifically, the computing device 100 may generate the plurality of feature pairs using features included in the digital certificate and features extracted from an image captured from a product whose connection relationship with a digital certificate is to be confirmed. In addition, the computing device 100 may input two features constituting each of the plurality of feature pairs to the similarity analysis model, thereby acquiring the similarity scores for each of the plurality of feature pairs. Then, the computing device 100 may determine the identity between the product corresponding to the digital certificate and the product of which image is captured based on the similarity score.

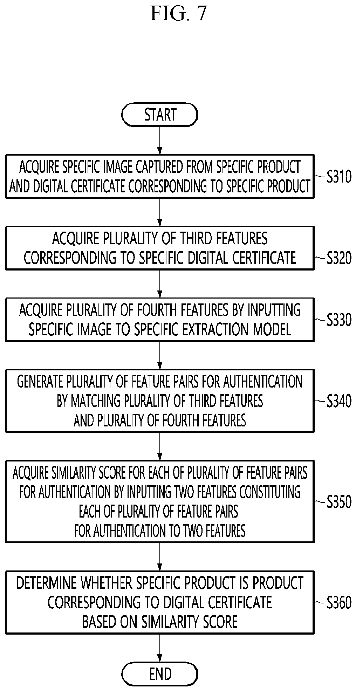

Hereinafter, an example of a method for authenticating a connection relationship between a product and a digital certificate performed by the computing device 100 will be described below with reference to FIG. 7.

In various embodiments, the computing device 100 may provide a webbased service or an application-based service. However, the present invention is not limited thereto.

The computing device 100 may include any type of computer system or computer device, such as a microprocessor, a mainframe computer, a digital processor, a portable device, and a device controller. However, the present invention is not limited thereto.

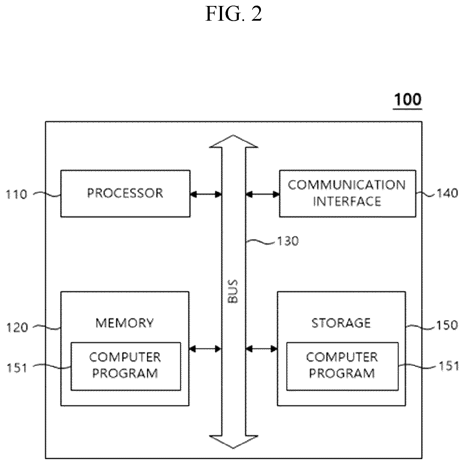

Hereinafter, a description of a hardware configuration of the computing device 100 will be described below with reference to FIG. 2.

Meanwhile, the user terminal 200 may be connected to the computing device 100 via a network 400, and may be a user terminal that uses the method of identity determination based on artificial intelligence performed by the computing device 100. For example, the user terminal 200 may include a terminal of a supplier or seller that supplies and sells an official product.

Here, the user terminal 200 may include, for example, various forms of computer devices. For example, the user terminal 200 may mean various terminal devices such as a smartphone, a tablet PC, a desktop, and a laptop.

The user terminal 200 includes a display on at least a portion of the terminal, and may include an operating system for operating an application or extension program-based service provided from the computing device 100. For example, the user terminal 200 may be a smart phone, but is not limited thereto. The user terminal 200 is a wireless communication device that ensures portability and mobility, and may include any type of handheld-based wireless communication device such as a navigation device, a personal communication system (PCS), a global system for mobile communication (GSM), a personal digital cellular (PDC) phone, a personal handyphone system (PHS), a personal digital assistant (PDA), international mobile telecommunication (IMT)-2000, code division multiple access (CDMA)-2000, W-code division multiple access (W-CDMA), a wireless broadband Internet (WiBro) terminal, a smart pad, or a tablet personal computer (PC).

The external server 300 may be connected to the computing device 100 through the network 400, and the computing device 100 may transmit and receive various types of information/data required for performing the method of identity determination based on artificial intelligence and store and manage various types of information/data generated by causing the computing device 100 to perform the method of identity determination based on artificial intelligence.

For example, the external server 300 may be a database server that stores information used in the method of identity determination based on artificial intelligence. As another example, the external server 300 may be a server that provides information used in the method of identity determination based on artificial intelligence.

The network 400 may mean a connection structure that enables information exchange between each node, such as a computing device, a plurality of terminals, and servers. For example, the network 400 may include a local area network (LAN), a wide area network (WAN), the Internet (World Wide Web (WWW)), a wired/wireless data communication network, a telephone network, a wired/wireless television communication network, or the like.

The wireless data communication network may include 3G, 4G, 5G, 3^{rd} Generation Partnership Project (3GPP), 5^{th} Generation Partnership Project (5GPP), long term evolution (LTE), world interoperability for microwave access (WiMAX), Wi-Fi, Internet, a LAN, a wireless WAN (WLAN), a WAN, a personal area network (PAN), radio frequency, a Bluetooth network, a near-field communication (NFC) network, a satellite broadcast network, an analog broadcast network, a digital multimedia broadcasting (DMB) network, and the like, but are not limited thereto.

FIG. 2 is a hardware configuration diagram of a computing device according to an embodiment of the present invention.

Referring to FIG. 2, the computing device 100 according to an embodiment of the present invention may include one or more processors 110, a memory 120 that loads a computer program 151 executed by the processor 110, a bus 130, a communication interface 140, and a storage 150 that stores the computer program 151. Here, only the components related to the embodiment of the present invention are illustrated in FIG. 2. Accordingly, those skilled in the art to which the present invention pertains may understand that other general-purpose components other than those illustrated in FIG. 2 may be further included.

The processor 110 controls an overall operation of each component of the computing device 100. The processor 110 may be composed of one or more cores, and may include a processor for data analysis and deep learning, such as a central processing unit (CPU), a general purpose graphics processing unit (GPGPU), a tensor processing unit (TPU), etc., of a computing device. Alternatively, the processor may be configured to include any form of processor well known in the art of the present invention.

In addition, the processor 110 may perform an operation on at least one application or program for executing the method according to the embodiments of the present invention, and the computing device 100 may include one or more processors.

In various embodiments, the processor 110 may further include a random access memory (RAM) (not illustrated) and a read-only memory (ROM) for temporarily and/or permanently storing signals (or data) processed in the processor 110. In addition, the processor 110 may be implemented in the form of a system-on-chip (SoC) including at least one of a graphics processing unit, a RAM, and a ROM.

The memory 120 stores various types of data, commands, and/or information. The memory 120 may load the computer program 151 from the storage 150 to execute methods/operations according to various embodiments of the present invention. When the computer program 151 is loaded into the memory 120, the processor 110 may perform the method/operation by executing one or more instructions constituting the computer program 151. The memory 120 may be implemented as a volatile memory such as a RAM, but the technical scope of the present invention is not limited thereto.

The bus 130 provides a communication function between the components of computing device 100. The bus 130 may be implemented as any type of buses, such as an address bus, a data bus, and a control bus.

The communication interface 140 supports wired/wireless Internet communication of the computing device 100. In addition, the communication interface 140 may support various communication manners other than the Internet communication. To this end, the communication interface 140 may be configured to include a communication module well known in the art of the present invention. In some embodiments, the communication interface 140 may be omitted.

The storage 150 may non-temporarily store the computer program 151. When the process according to an embodiment of the present invention is performed through the computing device 100, the storage 150 may store various types of information necessary to perform a method according to the disclosed embodiment or to provide a service.

The storage 150 may include a nonvolatile memory, such as a ROM, an erasable programmable ROM (EPROM), an electrically EPROM (EEPROM), and a flash memory, a hard disk, a removable disk, or any well-known computer-readable recording medium in the art to which the present invention pertains.

The computer program 151 may include one or more instructions to cause the processor 110 to perform methods/operations according to various embodiments of the present invention when loaded into the memory 120. That is, the processor 110 may perform the method/operation according to various embodiments of the present invention by executing the one or more instructions.

In an embodiment, the computer program 151 may include one or more instructions for performing various methods associated with various tasks related to training a neural network model.

Operations of the method or algorithm described with reference to the embodiment of the present invention may be directly implemented in hardware, in software modules executed by hardware, or in a combination thereof. The software module may reside in a RAM, a ROM, an EPROM, an EEPROM, a flash memory, a hard disk, a removable disk, a compact disc read-only memory (CD-ROM), or in any form of computer-readable recording media known in the art to which the invention pertains.

The components of the present invention may be embodied as a program (or application) and stored in media for execution in conjunction with a computer which is hardware. The components of the present invention may be executed in software programming or software elements, and similarly, embodiments may be realized in a programming or scripting language such as C, C++, Java, and assembler, including various algorithms implemented in a combination of data structures, processes, routines, or other programming constructions. Functional aspects may be implemented in algorithms executed on one or more processors.

FIGS. 3 to 6 are diagrams for describing an example of a method of identity determination based on artificial intelligence according to an embodiment of the present invention.

Referring to FIG. 3, the computing device 100 may acquire a first image of a reference product (S110). In addition, the computing device 100 may acquire a second image of a comparison target product which is a comparison target of the reference product (S120).

For example, a seller or supplier selling an official product may transmit a first image captured from a product before shipment to the computing device 100 using the user terminal 200. In addition, when the shipped product is returned, the seller or supplier may transmit a second image captured from the returned product to the computing device 100.

According to an embodiment, when the first image and the second image are captured at the same direction distance in the same direction, it may help increase the accuracy of determining the identity between the reference product and the comparison target product.

Accordingly, the computing device 100 may provide a capturing guide to the user terminal 200 for capturing the image during the process of acquiring the first image or the second image.

For example, the capturing guide may include at least one of a first capturing guide that displays a reference image around a capturing screen, a second capturing guide that displays the reference image by overlapping the reference image on the capturing screen, and a third capturing guide that compares an illuminance value recognized through the capturing screen with an appropriate illuminance value and displays the compared illuminance value on the capturing screen.

Additionally, the capturing guide may further include at least one of a fourth capturing guide that displays a guide message for capturing without light reflection on the capturing screen and a fifth capturing guide that displays a guide message (e.g., in the case of a wallet, opening the wallet and capturing the corresponding part) for a shape corresponding to a type of a product on the capturing screen.

Therefore, the computing device 100 of the present invention may increase the accuracy of determining the identity between the reference product and the comparison target product.

The computing device 100 may input the first image and the second image to a feature extraction model, and acquire a plurality of first features corresponding to the first image and a plurality of second features corresponding to the second image (S130). Here, the plurality of first features and the plurality of second features may include various type-specific features, such as color, shape, and texture, included in an image.

In an embodiment, the feature extraction model may be a model pre-trained to extract a plurality of features from an input image when an image is input.

Specifically, the feature extraction model is a convolutional neural network (CNN)-based model, and may be composed of an input layer that receives an image (specifically, pixel values of an image), an extraction feature extraction layer that includes sub-layers for extracting features, such as color, shape, and texture, from an input image, a normalization layer that normalizes a range of features extracted from the feature extraction layer, a fully connected layer that analyzes the extracted features and making decisions on a final task (e.g., shape for comparison, classification, regression, etc.), an output layer that generates a final output of a model. However, the present invention is not limited thereto.

The computing device 100 may match the plurality of first features and the plurality of second features to generate a plurality of feature pairs (S140).

Specifically, the computing device 100 may generate n*m feature pairs by matching each of n first features corresponding to the first image and each of m second features corresponding to the second image.

In various embodiments, when matching the plurality of first features and the plurality of second features, the computing device 100 may generate a feature pair by matching the plurality of first features and the plurality of second features for each type of feature.

For example, the computing device 100 may generate feature pairs by matching color-related features among the plurality of first features with color-related features among the plurality of second features. In addition, the computing device 100 may generate feature pairs by matching shape-related features among the plurality of first features with shape-related features among the second features. In addition, the computing device 100 may generate feature pairs by matching texture-related features among the plurality of first features with texture-related features among the second features.

Therefore, the computing device 100 may reduce an unnecessary matching operation, thereby increasing the efficiency of the process related to the generation of the feature pairs.

According to some additional embodiments of the present invention, the computing device 100 may induce the accurate capturing or determine the identity between the reference product and the comparison target product by allowing the feature extraction model to use the number of features extracted from each of the first image and the second image.

In an embodiment, the computing device 100 may request the re-capturing of the comparison target product when a difference between the first number of features extracted from the first image and the second number extracted from the second image exceeds a preset value, thereby acquiring the re-captured image. Here, the preset value may be, for example, a value corresponding to 20% of the first number or the second number, but is not limited thereto.

When the computing device 100 acquires the re-captured image, the feature extraction model may recognize the third number of features extracted from the re-captured image. The computing device 100 may compare the first number and the third number, and when a difference between the two numbers is less than or equal to a preset value, the next operation S140 may be performed.

Meanwhile, when the difference between the first number and the third number exceeds the preset value, the computing device 100 may determine that the reference product and the comparison target product are not the same.

For example, when the reference product and the comparison target product correspond to the shipped product and the returned product, the computing device 100 may recognize that the return fraud has occurred before performing the subsequent operations.

In various embodiments, the computing device 100 may determine, in advance, the minimum number of features for each product type (e.g., clothing, accessories, shoes, etc.) and brand. The computing device 100 may guide accurate capturing or determine the identity between the reference product and the comparison target product based on the minimum number of features.

For example, the computing device 100 may determine, in advance, the minimum number of features based on the type and brand related to the product image acquired in the past and the number of features extracted from the product image. For example, the computing device 100 may determine in advance 90% of an average of the number of features for each type and brand as the minimum number of features. For example, assuming that there is a history of extracting 1,000 features from an image captured from a product of a "wallet" type and a "A" brand, there is a history of extracting 900 features, and there is a history of extracting 1,100 features, the computing device 100 may determine in advance 900 corresponding to 90% of 1,000, which is an average value of 1,000, 900, and 1,100, as the minimum number of features.

In operation S110 or S120, the computing device 100 may receive the type and brand of the product from the user terminal 200 while acquiring the image of the reference product or the comparison target product. In this case, the computing device 100 may recognize the minimum number of features corresponding to the type and brand of the product included in the acquired image.

The computing device 100 may recognize whether the number of each of the plurality of first features and the plurality of second features acquired in operation S130 is greater than or equal to the minimum number of features.

In an embodiment, when the number of each of the plurality of first features and the plurality of second features is greater than or equal to the minimum number of features, the computing device 100 may perform the next operation S140 of generating the plurality of feature pairs.

Meanwhile, when the number of the plurality of first features acquired in operation S130 is less than the minimum number of features, the computing device 100 may request the user terminal 200 to re-capture the first image. Here, the computing device 100 may recognize the number of the plurality of first features by inputting the first image to the feature extraction model immediately after the first image is acquired in order to confirm whether the first image was captured normally.

That is, the computing device 100 may induce the accurate capturing using the number of features extracted from the first image.

In addition, the computing device 100 may request the user terminal 200 to re-capture the second image when the number of the plurality of second features is less than the minimum number of features.

When acquiring the re-captured second image by requesting the re-capturing of the second image, the computing device 100 may extract the plurality of second features from the re-captured second image using the feature extraction model and recognize the number of extracted second features. In addition, the computing device 100 may perform the next operation S140 of generating the plurality of feature pairs when the number of extracted second features is greater than or equal to the minimum number of features.

Meanwhile, when the number of second features extracted from the re-captured second image is less than the minimum number of features, the computing device 100 may determine that the reference product and the comparison target product are not the same.

For example, when the reference product and the comparison target product correspond to the shipped product and the returned product, the computing device 100 may recognize that the return fraud has occurred before performing the subsequent operations.

The computing device 100 may input two features constituting each of the plurality of feature pairs to the similarity analysis model, thereby acquiring the similarity scores for each of the plurality of feature pairs (S150).

In an embodiment, the similarity analysis model may be a model pre-trained to allow the feature extraction model to output a similarity score between features extracted from each of two different images.

Specifically, the similarity analysis model may perform optimization learning so that the similarity of the feature points extracted from each of two images using the two images captured from the same product is maximized. For example, when it is assumed that the similarity of each pair is described in n*m matrices in which n features extracted from one image captured from the same product and m features extracted from another image, respectively, are matched, the similarity analysis model may perform the optimization learning so that the total sum of matrices is maximized.

The computing device 100 may determine the identity between the reference product and the comparison target product based on the similarity score (S160).

Specifically, the computing device 100 may recognize the number of feature pairs with a similarity score exceeding a preset size among the feature pairs.

Here, the preset size may be, for example, a size of 0.8 corresponding to 80% of the maximum size (e.g., 1) of the similarity score, but is not limited thereto.

In addition, the computing device 100 may recognize that the reference product and the comparison target product are the same when the number of feature pairs exceeds the preset number. Here, the preset number may be, for example, a number corresponding to 50% of the total number of feature pairs, but is not limited thereto.

For example, when the reference product and the comparison target product correspond to the shipped product and the returned product, the computing device 100 may recognize that the same product as the shipped product is returned.

According to an embodiment of the present invention, as described above, the computing device 100 may determine that the reference product and the comparison target product are the same when the number of pairs with a similarity score greater than or equal to a certain value is greater than or equal to a certain number, rather than matching the features extracted from the images in which the reference product and the comparison target product are captured for each location to the extracted portions.

According to a specific embodiment of the present invention, the computing device 100 may select a main feature pair from among a plurality of feature pairs to more accurately determine the identity between the reference product and the comparison target product, and determine the identity between the reference product and the comparison target product based on the similarity score for the main feature pair.

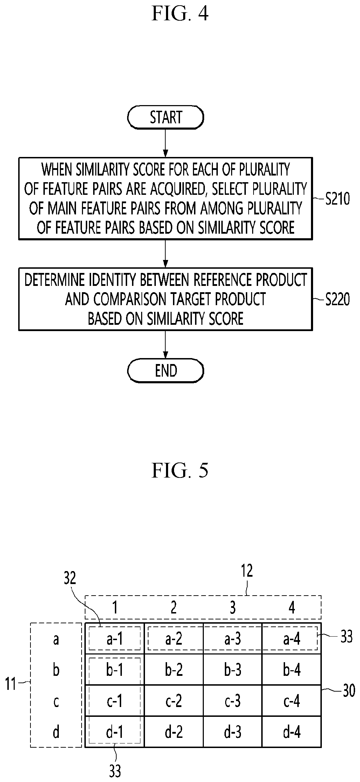

Referring to FIG. 4, when acquiring the similarity scores for each of the plurality of feature pairs, the computing device 100 may select a plurality of main feature pairs from among the plurality of feature pairs based on the similarity scores (S210).

Specifically, the computing device 100 may recognize overlapping feature pairs composed of mutually overlapping features from among the plurality of feature pairs. In addition, the computing device 100 may select a specific feature pair with the highest similarity score from among the overlapping feature pairs as the main feature pair.

For example, referring to FIG. 5, when it is assumed that the first features 11 extracted from the first image are a, b, c, and d, and the second features 12 extracted from the second image are 1, 2, 3, and 4, 16 feature pairs 30 may be generated, such as a-1, a-2, a-3, a-4, b-1, b-2, .... The similarity scores for each of the 16 feature pairs may be calculated by the similarity analysis model.

In a state where the similarity score is calculated, when the similarity score of a-1 is greater than a-2, a-3, a-4, b-1, c-1, and d-1, the computing device 100 may select a-1 as a main feature pair 32 and exclude the remaining feature pairs 33 in which a and 1 are matched.

That is, the computing device 100 of the present invention may compare a plurality of features extracted from each of the first image and the second image one by one regardless of location, and connect the pairs with the highest similarity score. In this case, one feature may be connected to only one pair, one feature may not belong to multiple pairs, and only the pair with the highest similarity score may be selected.

In addition, according to the present invention, the plurality of features extracted from each of the first image and the second image may be set to only allow 1:1 matching. This method was difficult to use in the past because it required the large amount of computations, but the large amount of computations can be processed quickly as a high-performance processing device (e.g., GPU) are developed.

Referring back to FIG. 4, when the computing device 100 determines the identity between the reference product and the comparison target product, the computing device 100 may determine the identity based on the similarity score for the main feature pair (S220).

Specifically, the computing device 100 may recognize the number of feature pairs with the similarity score exceeding the preset size among the main feature pairs. In addition, the computing device 100 may recognize that the reference product and the comparison target product are the same when the number of feature pairs exceeds the preset number.

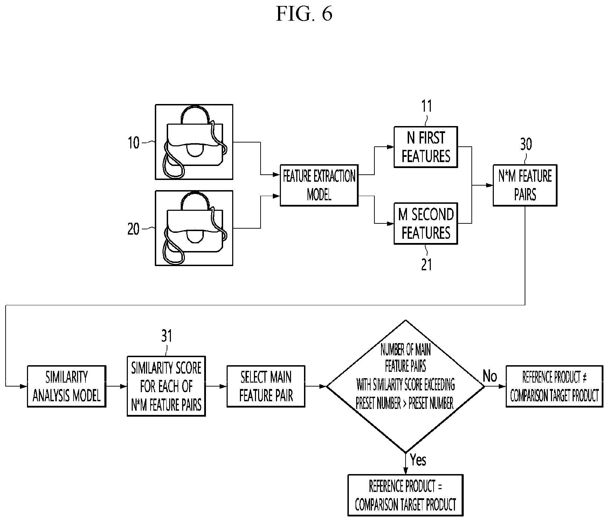

Hereinafter, the overall contents of the present invention will be described more easily with reference to FIG. 6.

Referring to FIG. 6, the computing device 100 may input the first image 10 captured from the reference product and the second image 20 captured from the comparison target product to the feature extraction model.

The computing device 100 may acquire n first features 11 extracted from the first image 10 and m second features 21 extracted from the second image 20 through the feature extraction model.

The computing device 100 may match n first features 11 and m second features 21 to generate n*m feature pairs 30.

The computing device 100 may input n*m feature pairs 30 to the similarity analysis model to acquire similarity scores 31 of each of the n*m feature pairs.

The computing device 100 may select main feature pairs based on the similarity scores 31 of each of the n*m feature pairs.

In addition, the computing device 100 may determine that the reference product and the comparison target product are the same when the number of main feature pairs having similarity scores exceeding a preset size is greater than the preset number.

Meanwhile, the computing device 100 may determine that the reference product and the comparison target product are not the same when the number of main feature pairs with the similarity scores exceeding the preset size is not greater than the preset number.

FIG. 7 is a diagram for describing an example of a method of authenticating a connection relationship between a product and a digital certificate according to various embodiments of the present invention.

According to an embodiment, in order to solve the distribution of counterfeit products, a product may be captured, and the captured image may be analyzed using an artificial intelligence-based model to determine whether a product is counterfeit or suspected of being counterfeit.

Meanwhile, when it is determined that the product captured by the artificial intelligence-based model is genuine, or when it is determined that the product is suspected of being counterfeit but is genuine by a rights holder, the computing device 100 may issue a digital certificate (or digital certificate of authentication) for the product. The digital certificate may record a counterfeit screening inspection record history for the product. In addition, the digital certificate may record features extracted from the image to determine whether the product is counterfeit or genuine.

According to various embodiments of the present invention, the computing device 100 may authenticate the connection relationship between the product and the digital certificate.

Specifically, the computing device 100 may perform a function of authenticating a connection relationship between a digital certificate and a product using the method of determining identity between products included in two images based on the similarity scores for each of the plurality of feature pairs. Here, the digital certificate may include information that certifies that the product is genuine and features extracted from an image captured from the product.

More specifically, referring to FIG. 7, the computing device 100 may acquire a specific image captured from a specific product and a specific digital certificate corresponding to the specific product (S310).

The computing device 100 may acquire a plurality of third features corresponding to the specific digital certificate (S320).

The computing device 100 may input the specific image to the feature extraction model to acquire a plurality of fourth features (S330).

The computing device 100 may generate a plurality of feature pairs for authentication by matching the plurality of third features and the plurality of fourth features (S340).

The computing device 100 may input two features constituting each of the plurality of feature pairs for authentication to the similarity analysis model, thereby acquiring the similarity scores for each of the plurality of feature pairs for authentication (S350).

The computing device 100 may determine whether a specific product is a product corresponding to a digital certificate based on the similarity score (S360).

Specifically, the computing device 100 may recognize the number of feature pairs with the similarity score exceeding the preset size among the feature pairs. When the number of feature pairs exceeds the preset number, the computing device 100 may recognize that the product corresponding to the digital certificate and the captured product are the same.

According to an embodiment of the present invention, as described above, the computing device 100 may determine that the reference product and the comparison target product are the same when the number of pairs with a similarity score greater than or equal to a certain value is greater than or equal to a certain number, rather than matching the features extracted from the images captured from the reference product and the comparison target product for each location to the extracted portions.

According to a specific embodiment of the present invention, the computing device 100 may select a main feature pair from among a plurality of feature pairs to more accurately determine the identity between the reference product and the comparison target product, and determine the identity between the product corresponding to the digital certificate and the captured product based on the similarity score for the main feature pair.

Specifically, when acquiring the similarity scores for each of the plurality of feature pairs, the computing device 100 may select a plurality of main feature pairs from among the plurality of feature pairs based on the similarity scores.

For example, the computing device 100 may recognize overlapping feature pairs composed of mutually overlapping features from among the plurality of feature pairs. In addition, the computing device 100 may select a specific feature pair with the highest similarity score from among the overlapping feature pairs as the main feature pair.

In addition, when determining the identity between the product corresponding to the digital certificate and the captured product, the computing device 100 may determine the identity based on the similarity score of the main feature pair.

For example, the computing device 100 may recognize the number of feature pairs with the similarity score exceeding the preset size among the main feature pairs. When the number of feature pairs exceeds the preset number, the computing device 100 may recognize that the product corresponding to the digital certificate and the captured product are the same.

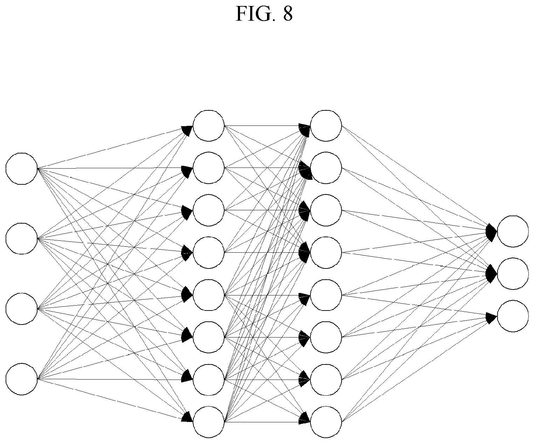

FIG. 8 is a schematic diagram illustrating one or more network functions related to an embodiment of the present invention.

Throughout this specification, an artificial intelligence model, a neural network model, a neural network, a network function, and a neural network may be used as the same meaning. The neural network may generally be composed of a set of interconnected computational units, which may be referred to as "nodes." These "nodes" may also be referred to as "neurons."

A deep neural network (DNN) may refer to a neural network including a plurality of hidden layers in addition to an input layer and an output layer. It is possible to identify latent structures of data by using the deep neural network. That is, it is possible to identify the latent structures (e.g., what objects are in the photo, what the content and emotion in the text are, what the content and emotion of the audio are, etc.) of a photo, text, video, sound, or music. The deep neural network may include a convolutional neural network (CNN), a recurrent neural network (RNN), an auto encoder, generative adversarial networks (GAN), a restricted Boltzmann machine (RBM), a deep belief network (DBN), a Q network, a U network, a Siamese network, and the like. The description of the deep neural network described above is only an example, and the present invention is not limited thereto.

The neural network may be trained through at least one of supervised learning, unsupervised learning, and semi supervised learning. The training of the neural network is to minimize errors in output. The training of the neural network learning is a process of repeatedly inputting training data to the neural network, calculating an error between an output of the neural network for the training data and a target, and updating weights of each node of the neural network by backpropagating errors of the neural network from an output layer of the neural network to an input layer in order to reduce the errors. In the case of the supervised learning, training data in which correct answers are labeled for each training data is used (i.e., labeled training data), and in the case of the unsupervised learning, correct answers may not be labeled for each training data. That is, for example, in the case of the supervised learning for data classification, the training data may be data in which each category is labeled for training data. The labeled training data is input to the neural network, and an error may be calculated by comparing the output (category) of the neural network with the label of the training data. As another example, in the case of the unsupervised learning for the data classification, the error may be calculated by comparing the input training data with the output of the neural network. The calculated error is backpropagated in a backward direction (i.e., from an output layer to an input layer) in the neural network, and connection weights of each node in each layer of the neural network may be updated according to the backpropagation. The amount of change in the connection weights of each node to be updated may be determined according to a learning rate. The calculation of the neural network for the input data and the backpropagation of the error may constitute a learning cycle (epoch). The learning rate may be applied differently depending on the number of times of repetitions of the learning cycle of the neural network. For example, in the early stage of the training of the neural network, a high learning rate may be used to allow the neural network to quickly acquire a certain level of performance, thereby increasing efficiency, and in the later stage of the training, a low learning rate may be used to increase accuracy.

In the training of the neural network, the training data may generally be a subset of actual data (i.e., data to be processed using the trained neural network). As a result, there may be the learning cycle where the error on the training data decreases but the error in the actual data increases. Overfitting is a phenomenon in which the error in the actual data increases due to the excessive learning on the training data. For example, a phenomenon in which a neural network that has learned a cat by using a yellow cat does not recognize cats after using a cat other than the yellow cat may be an example of overfitting. The overfitting may act as a cause of increasing errors in machine learning algorithms. Various optimization methods may be used to prevent the overfitting. To prevent the overfitting, methods, such as increasing training data, regularization, and dropout that omits some of the nodes in the network during the training process, may be applied

Operations of the method or algorithm described with reference to the embodiment of the present invention may be directly implemented in hardware, in software modules executed by hardware, or in a combination thereof. The software module may reside in a RAM, a ROM, an EPROM, an EEPROM, a flash memory, a hard disk, a removable disk, a CD-ROM, or in any form of computer-readable recording media known in the art to which the invention pertains.

The components of the present invention may be embodied as a program (or application) and stored in media for execution in conjunction with a computer which is hardware. The components of the present invention may be executed in software programming or software elements, and similarly, embodiments may be realized in a programming or scripting language such as C, C++, Java, and assembler, including various algorithms implemented in a combination of data structures, processes, routines, or other programming constructions. Functional aspects may be implemented in algorithms executed on one or more processors.

Those skilled in the art will appreciate that various exemplary logical blocks, modules, processors, means, circuits, and algorithm steps described in connection with the embodiments disclosed herein may be implemented by electronic hardware, various forms of programs or design codes (herein, for convenience, referred to as "software"), or a combination thereof. To clearly describe this interchangeability of hardware and software, various exemplary components, blocks, modules, circuits, and steps have been generally described above in terms of their functionality. Whether these functions are implemented as hardware or software depends on the specific application and the design constraints imposed on the overall system. Those skilled in the art will appreciate that each particular application may implement the described functionality in a variety of ways, but such implementation decisions should not be interpreted as deviating from the scope of the present invention.

Various embodiments presented herein may be implemented as methods, devices, or manufactured articles using standard programming and/or engineering techniques. The term "manufactured article" includes a computer program, carrier, or media accessible from any computer-readable device. For example, the computer-readable medium includes, but is not limited to, magnetic storage devices (e.g., hard disk, floppy disk, magnetic strip, etc.), optical disks (e.g., compact disc (CD), digital versatile disc (DVD), etc.), smart cards, and flash memory devices (e.g., EEPROM, card, stick, key drive, etc.). In addition, various storage media presented herein include one or more devices and/or other machine-readable media for storing information. The term "machine-readable medium" includes, but is not limited to, wireless channels and various other media capable of storing, retaining, and/or transmitting instructions(s) and/or data.

It is to be understood that particular order or hierarchy of steps in presented processes is an example of exemplary approaches. It is to be understood that the specific order or hierarchy of steps in processes may be rearranged within the scope of the present invention, based on design priorities. The appended method claims provides elements of various steps in a sample order but are not meant to be limited to the particular order or hierarchy presented.

According to a method of identity determination based on artificial intelligence of the present invention, it is possible to prevent damage to the official product suppliers. For example, according to the present invention, it is possible to accurately and quickly determine whether there is the return fraud by determining the identity between the shipped products (i.e., reference products) and the returned products (i.e., comparison target product) through the artificial intelligence model.

Effects of the present invention are not limited to the effects described above, and other effects that are not mentioned may be obviously understood by those skilled in the art from the following description.

Although exemplary embodiments of the present invention have been described with reference to the accompanying drawings, those skilled in the art will understand that various modifications and alterations may be made without departing from the spirit or essential feature of the present invention. Therefore, it is to be understood that the exemplary embodiments described hereinabove are illustrative rather than being restrictive in all aspects.

## Claims

1. A method of identity determination based on artificial intelligence, which is performed by a computing device including at least one processor, comprising:
acquiring a first image of a reference product;
acquiring a second image of a comparison target product which is a comparison target of the reference product;
acquiring a plurality of first features corresponding to the first image and a plurality of second features corresponding to the second image by inputting the first image and the second image to a feature extraction model;
generating a plurality of feature pairs by matching the plurality of first features and the plurality of second features;
acquiring a similarity score for each of the plurality of feature pairs by inputting two features constituting each of the plurality of feature pairs to a similarity analysis model; and
determining an identity between the reference product and the comparison target product based on the similarity score.

2. The method of claim 1, wherein the generating of the plurality of feature pairs by matching the plurality of first features and the plurality of second features includes generating n*m feature pairs by matching each of n first features corresponding to the first image with each of m second features corresponding to the second image.

3. The method of claim 1, further comprising selecting a plurality of main feature pairs from among the plurality of feature pairs based on the similarity score when the similarity score for each of the plurality of feature pairs is acquired,
wherein the determining of the identity between the reference product and the comparison target product includes determining the identity based on the similarity score for the main feature pairs.

4. The method of claim 3, wherein the selecting of the plurality of main feature pairs from among the plurality of feature pairs based on the similarity scores when the similarity score for each of the plurality of feature pairs is acquired includes:
recognizing overlapping feature pairs composed of mutually overlapping features among the plurality of feature pairs; and
selecting a specific feature pair with a highest similarity score from among the overlapping feature pairs as the main feature pair.

5. The method of claim 3, wherein the determining of the identity based on the similarity score for the main feature pair includes:
recognizing the number of feature pairs with a similarity score exceeding a preset size among the main feature pairs; and
recognizing that the reference product and the comparison target product are the same when the number of the feature pairs exceeds the preset number.

6. The method of claim 1, wherein the feature extraction model is a model pre-trained to extract a plurality of features from an image when the image is input, and
the similarity analysis model is a model pre-trained to allow the feature extraction model to output a similarity score between features extracted from each of two different images.

7. The method of claim 1, wherein the acquiring of the first image of the reference product or the acquiring of the second image of the comparison target product according to a request for return of the reference product includes providing a capturing guide to a user terminal for capturing an image, and
the capturing guide includes at least one of a first capturing guide that displays a reference image around a capturing screen, a second capturing guide that displays the reference image by overlapping the reference image on the capturing screen, and a third capturing guide that compares an illuminance value recognized through the capturing screen with an appropriate illuminance value and displays the compared illuminance value on the capturing screen.

8. The method of claim 1, further comprising authenticating a connection relationship between a product and a digital certificate,
wherein the authenticating of the connection relationship between the product and the digital certificate includes:
acquiring a specific image captured from a specific product and a specific digital certificate corresponding to the specific product;
acquiring a plurality of third features corresponding to the specific digital certificate;
acquiring a plurality of fourth features by inputting the specific image into the feature extraction model;
generating a plurality of feature pairs for authentication by matching the plurality of third features and the plurality of fourth features;
acquiring a similarity score for each of the plurality of feature pairs for authentication by inputting two features constituting each of the plurality of feature pairs for authentication to a similarity analysis model; and
determining whether the specific product is a product corresponding to the digital certificate based on the similarity scores.

9. An apparatus comprising:
a memory configured to store one or more instructions; and
a processor configured to execute the one or more instructions stored in the memory,
wherein the processor executes the one or more instructions to perform the method of claim 1.

10. A computer program stored in a computer-readable recording medium to execute the method of claim 1 in conjunction with a computer which is hardware.
